(19) **Europäisches Patentamt European Patent Office Office européen des brevets**

(11) **EP 4 538 196 A1**

(12) **EUROPEAN PATENT APPLICATION**
published in accordance with Art. 153(4) EPC

(43) Date of publication:
**16.04.2025 Bulletin 2025/16**

(51) International Patent Classification (IPC):
**B65D 65/40** (2006.01)   **B32B 7/028** (2019.01)
**B32B 9/00** (2006.01)   **B32B 27/32** (2006.01)

(21) Application number: **23819805.5**

(52) Cooperative Patent Classification (CPC):
**B32B 7/028; B32B 9/00; B32B 27/32; B65D 65/40**

(22) Date of filing: **05.06.2023**

(86) International application number:
**PCT/JP2023/020833**

(87) International publication number:
**WO 2023/238825 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.06.2022 JP 2022093635**
**14.02.2023 JP 2023021078**

(71) Applicant: **Toppan Holdings Inc.**
**Tokyo 110-0016 (JP)**

(72) Inventors:
• **ONO, Yasunori**
**Tokyo 110-0016 (JP)**
• **OGIHARA, Yu**
**Tokyo 110-0016 (JP)**

(74) Representative: **Hoffmann Eitle**
**Patent- und Rechtsanwälte PartmbB**
**Arabellastraße 30**
**81925 München (DE)**

(54) **PACKAGING LAMINATE AND PACKAGING BAG**

(57) A packaging laminate 100A contains polypropylene in an amount of 90% by mass or more of the total. The laminate 100A includes at least a substrate layer 11 including a first polypropylene film, and a sealant layer 12 including a second polypropylene film. The first polypropylene film is an oriented polypropylene film, the first polypropylene film and the second polypropylene film are arranged with their MDs substantially aligned, the first polypropylene film has an MD thermal shrinkage $R_{MD1}$ smaller than or equal to 10%, the first polypropylene film has a TD thermal shrinkage $R_{TD1}$ smaller than or equal to 12%, and the second polypropylene film has a TD thermal shrinkage $R_{TD2}$ smaller than the thermal shrinkage $R_{TD1}$ and greater than or equal to 0.5%.

FIG.1

EP 4 538 196 A1

**Description**

[Technical Field]

The present disclosure relates to a packaging laminate and a packaging bag.

[Background Art]

As the world's attention is focused on the problem of plastic waste, the demand for eco-friendly packaging is growing in order to achieve a recycling-oriented society. For packaging, many global corporations have set goals for better plastic resource recycling and announced a variety of measures. The U.S. has started to develop recycling routes for polyethylene from collection to reuse. In this way, recycling efforts that are based on monomaterials (single materials) are accelerating globally, and packaging laminates, which have traditionally been improved by combining various different materials, are also being demanded to be monomaterial packaging laminates.

When retort pouch packaging is changed from traditional multi-material (composite material) packaging to monomaterial packaging substantially made of a single material, a polypropylene-based laminate (PP monomaterial laminate) may be used for sealant characteristics. For example, Patent Literature 1 below proposes monomaterial packaging containing polypropylene.

[Citation List]

[Patent Literature]

[PTL 1] JP 2020-040257 A

[Summary of the Invention]

[Technical Problem]

When a PP monomaterial laminate is used as monomaterial packaging, an oriented polypropylene film is used for a substrate layer in direct contact or proximity to seal bars during bag making (heat sealing), in order to provide enough heat resistance to prevent thermal fusion bonding to the seal bars. However, a laminate with an oriented polypropylene film used as its substrate layer may be deformed by heat, causing appearance defects such as curls or ripples. Such deformation (distortion) can cause failure to grip the bag in a subsequent content-filling process or failure in opening and may reduce the transportability.

There is also a demand for monomaterial packaging to be subjected to a high retort treatment, which is a retort treatment performed at a higher temperature than a typical retort treatment. However, research by the present inventors has revealed that a PP monomaterial laminate (for example, the laminate in Patent Literature 1) curls during a high retort treatment at 125 °C or higher.

Thus, an object of an aspect of the present disclosure is to provide a polypropylene-based laminate that is less prone to thermal deformation during bag making and less prone to curling caused by a high retort treatment. An object of another aspect of the present disclosure is to provide a package formed by making the above laminate into a bag.

[Solution to Problem]

Aspects of the present disclosure are provided in [1] to [15] below.
[1] A packaging laminate containing polypropylene in an amount of 90% by mass or more of the total, the packaging laminate comprising at least:

a substrate layer including a first polypropylene film; and

a sealant layer including a second polypropylene film,

in which the first polypropylene film is an oriented polypropylene film,

the first polypropylene film and the second polypropylene film are arranged with their machine directions (MDs) substantially aligned, and

when the thermal shrinkage of a film in a predetermined direction is defined according to formula (1) below,

the first polypropylene film has a machine-direction (MD) thermal shrinkage $R_{MD1}$ smaller than or equal to 10.0%,

the first polypropylene film has a transverse-direction (TD) thermal shrinkage $R_{TD1}$ smaller than or equal to 12.0%, and

the second polypropylene film has a TD thermal shrinkage $R_{TD2}$ smaller than the thermal shrinkage $R_{TD1}$ and greater than or equal to 0.5%.

Thermal shrinkage (%) in predetermined direction = ([Length in predetermined direction before heating] - [Length in predetermined direction after heating at 150 °C for 15 minutes])/[Length in predetermined direction before heating] $\times$ 100     (1)

[2] The laminate according to [1], in which
the first polypropylene film has a crystallinity greater than or equal to 80% both in the MD and the TD as measured by grazing incidence X-ray diffraction.
[3] The laminate according to [2], in which
the first polypropylene film has a crystallinity greater than or equal to 86% in one of the MD and the TD and a crystallinity greater than or equal to 80% in the other as measured by grazing incidence X-ray diffraction.
[4] The laminate according to any one of [1] to [3], in which
when the first polypropylene film is subjected to a heat treatment under condition (i) below, followed by differential scanning calorimetry under condition (ii) below, at least one melting peak is observed at less than 163 °C.

(i) The temperature is raised from 25 °C to 230 °C at a heating rate of 10 °C/min, held at 230 °C for two minutes, then lowered from 230 °C to 25 °C at a cooling rate of 10 °C/min, and held at 25 °C for five minutes.

(ii) The temperature is raised from 25 °C to 230 °C at a heating rate of 10 °C/min and held at 230 °C for five minutes.

[5] The laminate according to any one of [1] to [4], in which
when the first polypropylene film is subjected to differential scanning calorimetry under condition (iii) below, at least one melting peak is observed at 167 °C or higher.
(iii) The temperature is raised from 25 °C to 230 °C at a heating rate of 10 °C/min and held at 230 °C for two minutes.
[6] The laminate according to any one of [1] to [5], in which
the thermal shrinkage $R_{MD1}$ and the thermal shrinkage $R_{TD1}$ of the first polypropylene film are each 7.0% or less.
[7] The laminate according to any one of [1] to [6], further comprising:

an intermediate layer between the substrate layer and the sealant layer, the intermediate layer including a third polypropylene film,
in which the first polypropylene film, the second polypropylene film, and the third polypropylene film are arranged with their MDs substantially aligned, and
when the thermal shrinkage of a film in a predetermined direction is defined in formula (1) above,
the third polypropylene film has a TD thermal shrinkage $R_{TD3}$ greater than the thermal shrinkage $R_{TD2}$ and smaller than or equal to 12.0%.

[8] The laminate according to [7], in which
at least one of the substrate layer and the intermediate layer includes an inorganic oxide layer and a gas barrier coating layer covering the inorganic oxide layer.
[9] The laminate according to [7] or [8], in which

the first polypropylene film and the third polypropylene film each have a thickness of 18 to 30 $\mu$m, and
the second polypropylene film has a thickness of 50 to 100 $\mu$m.

[10] The laminate according to any one of [7] to [9], in which
the substrate layer and the intermediate layer are adhered together by an adhesive layer with a thickness of 0.5 to 4

μm.

[11] The laminate according to any one of [7] to [10], in which
the intermediate layer and the sealant layer are adhered together by an adhesive layer with a thickness of 0.5 to 4 μm.

[12] The laminate according to any one of [1] to [11], in which
the first polypropylene film is a biaxially oriented polypropylene film.

[13] The laminate according to any one of [1] to [12], in which
the second polypropylene film is a cast polypropylene film.

[14] The laminate according to any one of [1] to [13], in which
the laminate is for a retort pouch.

[15] A packaging bag formed by making the laminate according to any one of [1] to [14] into a bag.

[Advantageous Effects of the Invention]

The present disclosure can provide a polypropylene-based laminate that is less prone to thermal deformation during bag making and less prone to curling caused by a high retort treatment. According to another aspect of the present disclosure, an object of the disclosure is to provide a package formed by making the laminate into a bag.

[Brief Description of the Drawings]

[Fig. 1] Fig. 1 is a schematic cross-sectional view of a laminate according to an embodiment.

[Fig. 2] Fig. 2 is a schematic cross-sectional view of a laminate according to another embodiment.

[Fig. 3] Fig. 3 is a schematic diagram illustrating a method for measuring the thermal shrinkage during oven heating.

[Fig. 4] Fig. 4 is an enlarged view of a part of the laminate in Fig. 2.

[Fig. 5] Figs. 5(a) to 5(c) are cross-sectional views of the seal area of a pouch and schematic diagrams illustrating distortion states of the pouch after heat sealing.

[Fig. 6] Fig. 6 is a schematic diagram illustrating a method for measuring the degree of curling caused during a high retort treatment.

[Description of the Embodiments]

As used herein, a numerical range indicated by "to" refers to the range that includes the numbers before and after "to" as the minimum and maximum values. Unless otherwise specified, the numbers before and after "to" are in the same units. When stepwise numerical ranges are described herein, the upper or lower limit of the numerical range in one step may be replaced with the upper or lower limit of the numerical range in another step. When a numerical range is described herein, the upper or lower limit of the numerical range may be replaced with a value indicated in the Examples. Separately described upper limits and lower limits may optionally be combined.

Exemplary embodiments of the present disclosure will now be described in detail with reference to the drawings as appropriate. It is noted that like reference numerals designate identical or corresponding components throughout the drawings, and redundant description is omitted. Further, dimensional ratios in the drawings are not limited to those shown in the drawings.

<Laminate>

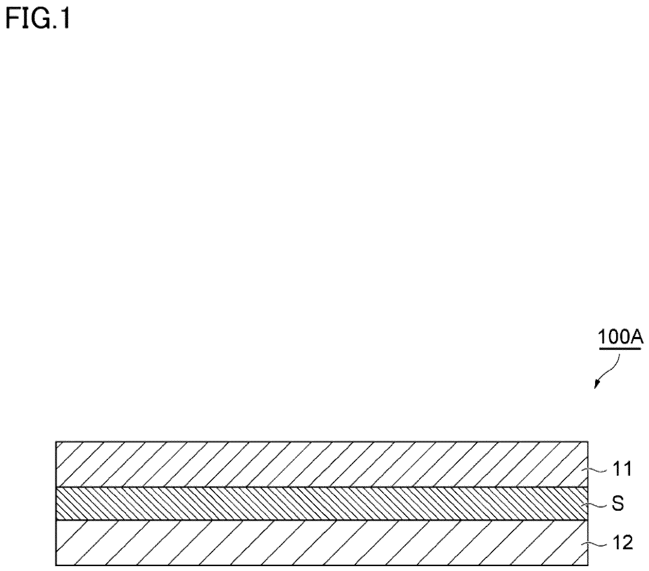

Fig. 1 illustrates a laminate 100A including a substrate layer 11 and a sealant layer 12. The substrate layer 11 and the sealant layer 12 are bonded together by an adhesive layer S.

The substrate layer 11 and the sealant layer 12 each include a polypropylene film (polypropylene film). As used herein, the term "polypropylene film" refers to a film consisting mainly of a polypropylene resin and for example, containing a polypropylene resin in an amount of 90% by mass or more of the total of the film. Hereinafter, the polypropylene film contained in the substrate layer 11 is referred to as the first polypropylene film, and the polypropylene film contained in the sealant layer 12 is referred to as the second polypropylene film.

In the laminate 100A, the first polypropylene film and the second polypropylene film are placed in such a way that their machine directions (MDs) are substantially the same (that is, their angular difference falls within ±15°). In other words, in the laminate 100A, the MD of the first polypropylene film and the MD of the second polypropylene film are substantially the same, and the transverse direction (TD) of the first polypropylene film and the TD of the second polypropylene film are substantially the same.

To determine the MD of a film, for example, a phase difference measurement device (trade name: KOBRA, manufactured by Oji Scientific Instruments Co., Ltd.) is used to measure the orientation angle. The orientation angle allows the MD and the TD to be discerned. When the film is an oriented polypropylene film, the direction in which molecular chains are oriented can be determined as the TD.

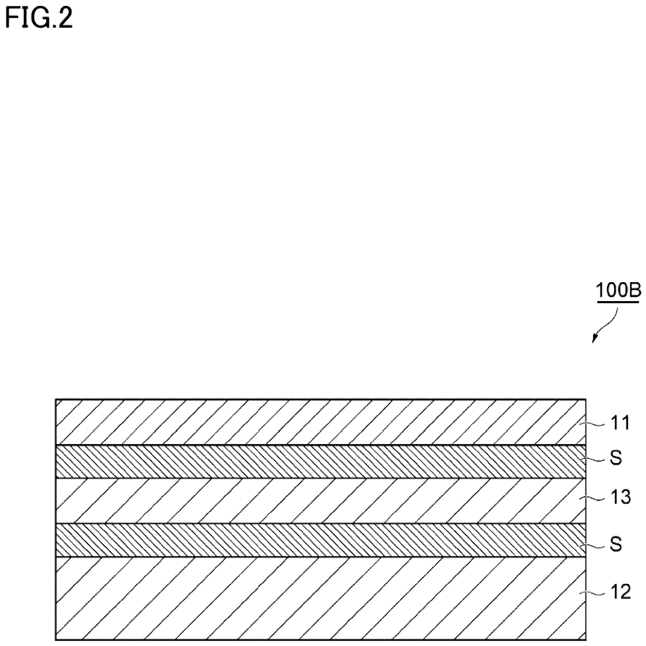

Fig. 2 illustrates a laminate 100B including a substrate layer 11, an intermediate layer 13, and a sealant layer 12 in this order. The substrate layer 11 and the intermediate layer 13 are bonded together by an adhesive layer S, as well as the intermediate layer 13 and the sealant layer 12 are bonded together by another adhesive layer S.

The intermediate layer 13 includes a polypropylene film. Hereinafter, the polypropylene film included in the intermediate layer 13 is referred to as the third polypropylene film. The details of the substrate layer 11 and the sealant layer 12 are the same as those of the laminate 100A and include the first polypropylene film and the second polypropylene film, respectively.

In the laminate 100B, the first polypropylene film, the second polypropylene film, and the third polypropylene film are placed in such a way that their MDs are substantially the same (that is, their angular difference falls within ±15°). In other words, the MD of the first polypropylene film, the MD of the second polypropylene film, and the MD of the third polypropylene film are substantially the same, and the TD of the first polypropylene film, the TD of the second polypropylene film, and the TD of the third polypropylene film are substantially the same.

The laminate (100A, 100B) may have a thickness of 90 to 150 μm, 95 to 140 μm, or 100 to 130 μm.

The laminate (100A, 100B) is a laminate used as a material for a packaging bag (packaging laminate) and contains polypropylene in an amount of 90% or more of the total. Herein, the expression "contain polypropylene in an amount of 90% of the total" is synonymous with the polypropylene content of the laminate (100A, 100B) being 90% by mass or more based on the total amount of the laminate. The laminate is thus highly recyclable and appropriately used as (monomaterial) packaging substantially made of a single material. To further improve the recyclability, the polypropylene content of the laminate may be 95% by mass or more based on the total amount of the laminate. The polypropylene content has an upper limit of 100% by mass.

As used herein, the term "polypropylene content" refers to the amount of the polypropylene resin contained in the laminate. However, when the resin is a copolymer containing a comonomer other than propylene as monomer units, the amount of the monomer units derived from the comonomer is not included in the polypropylene content, but the amount of the monomer units derived from the propylene monomer is determined as the polypropylene content. The polypropylene content can be measured by Raman spectroscopy.

When the thermal shrinkage in a predetermined direction (MD or TD) of a film is defined in formula (1) below, in the laminate 100A illustrated in Fig. 1, the MD thermal shrinkage of the first polypropylene film $R_{MD1}$, the TD thermal shrinkage of the first polypropylene film $R_{TD1}$, and the TD thermal shrinkage of the second polypropylene film $R_{TD2}$ satisfy condition (I) below. In the laminate 100B illustrated in Fig. 2, the $R_{MD1}$, $R_{TD1}$, and $R_{TD2}$ satisfy condition (I) below as well as the TD thermal shrinkage of the third polypropylene film $R_{TD3}$ satisfies condition (II) below.

Thermal shrinkage (%) in predetermined direction = ([Length in predetermined direction --> before heating] - [Length in predetermined direction after heating at 150 °C for 15 minutes])/[Length in predetermined direction before heating] × 100     (1)

$$[\text{Condition (I)}]$$

$$10.0\% \geq R_{MD1}$$

$$12.0\% \geq R_{TD1} > R_{TD2} \geq 0.5\%$$

$$[\text{Condition (II)}]$$

$$12.0\% \geq R_{TD3} > R_{TD}$$

The above thermal shrinkages are specifically measured in accordance with the following procedure.

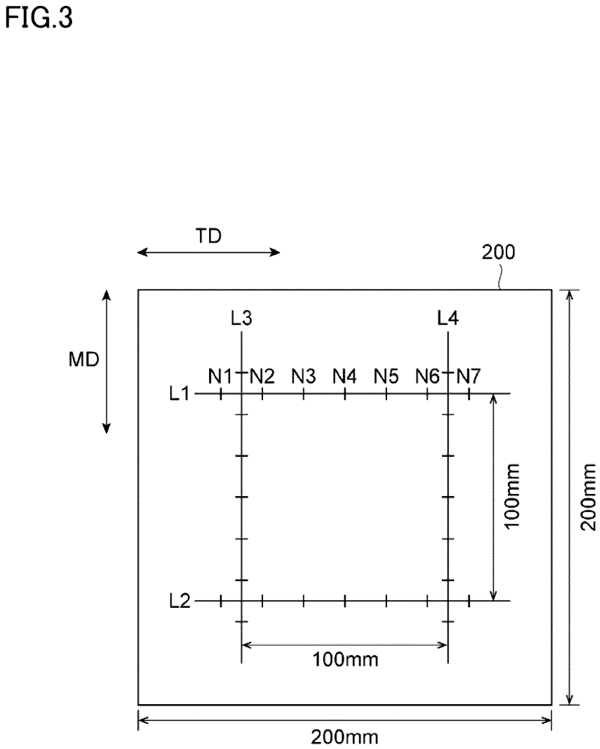

(a) As illustrated in Fig. 3, a measurement sample 200 is obtained by cutting a piece measuring 200 mm by 200 mm from the film to be measured.

(b) As illustrated in Fig. 3, two straight lines L1 and L2 parallel to the TD of the measurement sample 200 and 120 mm or more long are drawn 100 mm apart on the surface of the measurement sample 200.

(c) As illustrated in Fig. 3, two straight lines L3 and L4 parallel to the MD of the measurement sample 200 and 120 mm or more long are drawn 100 mm apart on the surface of the measurement sample 200.

(d) As illustrated in Fig. 3, the straight lines L1 to L4 are each marked with scales N1 to N7 at seven points at intervals of 20 mm. When the scales are marked, the scales of the straight lines L1 and L2 are aligned in such a way that the MD is parallel to the imaginary straight lines connecting the scales N1 to N7 of the straight line L1 to the scales N1 to N7 of the straight line L2, respectively. The scales of the straight lines L3 and L4 are also aligned in such a way that the TD is parallel to the imaginary straight lines connecting the scales N1 to N7 of the straight line L3 to the scales N1 to N7 of the straight line L4, respectively.

(e) With a glass plate in an oven heated to 150 °C, the measurement sample 200 on a Teflon (registered trademark) sheet is placed over the glass plate and heated for 15 minutes. After the heating, the measurement sample 200 is taken out from the oven and allowed to stand at room temperature (25 °C) for 30 minutes.

(f) The direct distance between the scale N1 of the straight line L1 (the intersection point between L1 and N1) and the scale N1 of the straight line L2 (the intersection point between L2 and N1) is measured before and after the heating as the length in the MD, and the thermal shrinkage in the MD is calculated from formula (1) above. Similarly, the thermal shrinkage in the MD is calculated at each position of the scales N2 to N7, and the average value of the thermal shrinkages in the MD calculated at the positions N1 to N7 is determined as the MD thermal shrinkage $R_{MD}$ of the measurement sample 200.

(g) The direct distance between the scale N1 of the straight line L3 (the intersection point between L3 and N1) and the scale N1 of the straight line L4 (the intersection point between L4 and N1) is measured before and after the heating as the length in the TD, and the thermal shrinkage in the TD is calculated from formula (1) above. Similarly, the thermal shrinkage in the TD is calculated at each position of the scales N2 to N7, and the average value of the thermal shrinkages in the TD calculated at the positions N1 to N7 is determined as the TD thermal shrinkage $R_{TD}$ of the measurement sample 200.

Typically, the thermal shrinkage of a film changes little during a laminate manufacturing process, so that the laminates 100A and 100B can be obtained by using films that exhibit the above thermal shrinkages when the thermal shrinkage of each film is measured alone.

The substrate layer is a portion in direct contact or proximity to heat-seal bars during bag making (heat sealing) and also a particularly heated part of the layers of the laminate. Accordingly, it is thought that a conventional PP monomaterial laminate experiences a deformation (distortion) such as curls or ripples during bag making (i.e., heat sealing) when the substrate layer shrinks thermally. In particular, a sealant layer used in packaging for retort pouches has a melting point high enough to prevent opening under retort conditions, so that the temperature during heat sealing tends to be higher, and the deformation is thought to be more likely to occur. In contrast, as described above, the laminate (100A, 100B) is less prone to thermal deformation during bag making because of the sufficiently low thermal shrinkages $R_{MD1}$ and $R_{TD1}$ (the MD thermal shrinkage and the TD thermal shrinkage of the first polypropylene film). In addition, for the above reason, the laminate (100A, 100B) is less likely to wrinkle during bag making. Thus, the laminate (100A, 100B) enables easy production of a package that has less deformation (distortion) and wrinkling, good appearance, high transportability, and excellent workability in filling.

Although a conventional PP monomaterial laminate typically includes a sealant layer that is a material (sealant film) with almost no thermal shrinkage, the laminate (100A, 100B) is less likely to curl during a retort treatment (high retort treatment) at a high temperature of 125 °C or higher because, as described above, the thermal shrinkage $R_{TD2}$ (the TD thermal shrinkage of the second polypropylene film) is 0.5% or more. Thus, the laminate can appropriately be used for a retort pouch.

The layers that constitute the laminate (100A, 100B) illustrated in Figs. 1 and 2 are described in detail below.

(Substrate Layer)

The substrate layer 11 is a layer that serves as a support and including the first polypropylene film. The substrate layer 11 is a layer that forms the outside of the laminate (100A, 100B) (outermost layer).

The first polypropylene film is formed from a polypropylene resin that may be a monopolymer (homopolymer) of propylene or an interpolymer (copolymer) of propylene and another comonomer. Examples of the copolymer include a propylene-ethylene random copolymer, a propylene-ethylene block copolymer, and a propylene-$\alpha$ olefin copolymer. The polypropylene resin may be, for example, acid-modified polypropylene obtained by graft-modifying polypropylene with an unsaturated carboxylic acid, an acid anhydride of an unsaturated carboxylic acid, or an ester of an unsaturated carboxylic acid. The first polypropylene film may further include various additives such as a flame retarder, a slip agent, an antiblocking agent, an antioxidant, a light stabilizer, a tackifier, and an antistatic agent.

The first polypropylene film is an oriented polypropylene film. Since oriented polypropylene films have high heat resistance, the first polypropylene film that is an oriented polypropylene film can prevent the substrate layer from being heat-sealed to the heat-seal bars. The oriented polypropylene film may be a film stretched by a known method such as inflation stretching, uniaxial stretching, or biaxial stretching. The oriented polypropylene film may be a biaxially oriented polypropylene film because the above-mentioned thermal shrinkages ($R_{MD1}$ and $R_{TD1}$) can be achieved more easily.

The surface of the first polypropylene film may be subjected to various pretreatments such as corona treatment, plasma treatment, and flame treatment.

The first polypropylene film is not limited to a particular thickness. Although the thickness may range from 6 to 200 $\mu$m depending on the use, the thickness may be 9 to 60 $\mu$m, 18 to 60 $\mu$m, or 9 to 50 $\mu$m to reduce usage of materials for the purpose of reducing environmental burdens and to achieve high heat resistance, impact resistance, and excellent gas barrier performance. As the thickness of the substrate layer decreases, the laminate becomes more likely to shrink during heat sealing. However, the laminate according to the present embodiment includes the substrate layer satisfying the specific conditions, and thus the laminate is less likely to shrink even if the substrate layer is thin. Accordingly, the thickness of the first polypropylene film may be less than 25 $\mu$m or 20 $\mu$m or less.

The first polypropylene film in the laminate 100A may have a thickness of 36 to 60 $\mu$m, 38 to 55 $\mu$m, or 40 to 50 $\mu$m to reduce usage of materials for the purpose of reducing environmental burdens and to achieve high heat resistance, impact resistance, and excellent gas barrier performance. The first polypropylene film in the laminate 100B may have a thickness of 12 to 38 $\mu$m, 18 to 30 $\mu$m, or 20 to 25 $\mu$m to reduce usage of materials for the purpose of reducing environmental burdens and to achieve high heat resistance, high impact resistance, and excellent gas barrier performance.

The thickness of the first polypropylene film may be 10 to 50% of the total thickness of the laminate. The first polypropylene film in the laminate 100A may have a thickness accounting for 20 to 60%, 23 to 50%, or 25 to 40% of the total thickness of the laminate to reduce usage of materials for the purpose of reducing environmental burdens and to achieve high heat resistance, high impact resistance, and excellent gas barrier performance. The first polypropylene film in the laminate 100B may have a thickness accounting for 10 to 50%, 13 to 45%, or 15 to 40% of the total thickness of the laminate to reduce usage of materials for the purpose of reducing environmental burdens and to achieve high heat resistance, high impact resistance, and excellent gas barrier performance.

The thickness of the first polypropylene film may be 90% or more of the thickness of the substrate layer 11, and the substrate layer 11 may consist of the first polypropylene film.

The MD thermal shrinkage of the first polypropylene film $R_{MD1}$ is 10.0% or less and may be 8.0% or less, 7.0% or less, or 5.0% or less to further reduce thermal deformation during bag making and curling caused by high retort treatment. The thermal shrinkage $R_{MD1}$ may be greater than the MD thermal shrinkage of the second polypropylene film $R_{MD2}$. Since the first polypropylene film is the outermost layer after bag making, mechanical properties (stiffness, tensile strength, printability) and optical properties (transparency, gloss) are also desired. To improve these properties, it is effective to stretch the entangled polymer chains and orient the crystal, or cause molecular orientation, and stretching (in particular, biaxially stretching) is useful in achieving the orientation. Stretching almost inevitably involves thermal shrinkage, and the thermal shrinkage of the first polypropylene film $R_{MD1}$ may be, for example, 1.0% or more or 3.0% or more. That is, the thermal shrinkage $R_{MD1}$ may be 1.0 to 10.0% or 3.0 to 10.0%.

The TD thermal shrinkage of the first polypropylene film $R_{TD1}$ is 12.0% or less and may be 10.0% or less, 8.0% or less, or 7.0% or less to further reduce thermal deformation during bag making and curling caused by a high retort treatment. The thermal shrinkage $R_{TD1}$ may be, for example, 1.0% or more or 3.0% or more. That is, the thermal shrinkage $R_{TD1}$ may be 1.0 to 12.0% or 3.0 to 12.0%.

To further reduce thermal deformation during bag making and curling caused by high retort treatment, the thermal shrinkage $R_{MD1}$ and the thermal shrinkage $R_{TD1}$ may both be 7.0% or less.

The first polypropylene film with the thermal shrinkages $R_{MD1}$ and $R_{TD1}$ within the above range may be formed by stretching (in particular, biaxially stretching) or obtained by, for example, using a resin with a high melting point as the polypropylene resin that is a material for the film.

The crystallinity of the first polypropylene film measured by grazing incidence X-ray diffraction may be 80% or more both in the MD and the TD. The crystallinity may be 86% or more in one of the MD and the TD and 80% or more in the other. The crystallinity of the first polypropylene film in the MD and the TD may be measured by grazing incidence X-ray diffraction under the conditions described below. When the crystallinity in the MD is measured, the X-ray emitter and the X-ray detector are arranged in a direction perpendicular to the MD. When the crystallinity in the TD is measured, the X-ray emitter and the X-ray detector are arranged in a direction perpendicular to the TD.

(Measurement Conditions)

Measurement device: X-ray diffractometer (manufactured by Rigaku Corporation, trade name: RINT TTR III)

Optical system: parallel beam method (detector: scintillation counter, use: for small angle, target: surface of sample)

Scanning axis: $2\theta/\theta$

Measurement method: continuous

Counting unit: cps

Starting angle: 3° (approximate)

End angle: 35°

Sampling width: 0.02°

Scanning speed: 4°/min

Voltage: 50 kV

Current: 300 mA

Divergence longitudinal slit: 10 mm

Scattering slit: open

Receiving slit: open

Crystallinity calculation method: peak separation

Analysis software: MDI JADE PRO/version 8.6
In a diffraction pattern obtained by the X-ray diffraction, the background, amorphous components, and crystalline components are separated by profile fitting. The areas under the diffraction curves of the amorphous and crystalline components (integrated intensities) separated from all scattering curves are used to calculate the crystallinity from the equation below.

$$Xc = Ic/(Ic + Ia) \times 100$$

Xc: crystallinity

Ic: crystalline scattering intensity

Ia: amorphous scattering intensity

The first polypropylene film with a crystallinity of 80% or more in the MD and the TD can further reduce the likelihood that the laminate will shrink during the heat-sealing step in the process of making the laminate into a bag. As a result, the packaging bag is less likely to deform or wrinkle, and also the packaging bag is less likely to have a misaligned pattern or decrease in physical properties such as laminate strength. Furthermore, the first polypropylene film with crystallinities of 86% or more in one of the MD and the TD and 80% or more in the other can reduce the likelihood of whitening during the heat-sealing step in the process of making the laminate into a bag. This can prevent defects in the appearance and performance of the resultant packaging bag and problems during transportation or filling. To achieve the above effects at a higher level, the first polypropylene film may have a crystallinity of 90% or more in one of the MD and the TD and 84% or more in the other. The first polypropylene film may have a crystallinity of 80% or more, 84% or more, or 86% or more in the MD and a crystallinity of 80% or more or 84% or more in the TD. Although the upper limit of the crystallinity is not limited to a particular value, the upper limit may be, for example, 95% or less both in the MD and TD. The crystallinities of the first polypropylene film in the MD and the TD may be adjusted depending on, for example, the stretching conditions, the molecular weight, the cooling temperature, and the addition of a crystal nucleating agent.

The use of the first polypropylene film with a crystallinity of 80% or more in the MD and the TD enables the effects described below to be achieved in the laminate manufacturing process. The laminate manufacturing process (bonding process) involves many heating steps such as a corona treatment and an oven step, which may shrink the substrate layer during processing and cause a misaligned pattern or variations in laminate strength. However, the use of the first polypropylene film with a crystallinity of 80% or more in the MD and the TD can prevent the substrate layer from shrinking because of the high crystallinity and reduce misaligned patterns and variations in laminate strength. The use of the first polypropylene film with a crystallinity of 80% or more in the MD and the TD allows a higher oven temperature after, for example, printing or applying an adhesive, thus enabling a reduction in residual solvent, a faster operation, and an improvement in the production of the laminate.

In the first polypropylene film, the difference between the crystallinity in the MD and the crystallinity in the TD measured by grazing incidence X-ray diffraction may be 4% or more or 10% or less. As the difference between the crystallinity in the MD and the crystallinity in TD decreases, the variation in the crystal of the substrate layer decreases to improve durability. Thus, the use of the first polypropylene film in which the difference between the crystallinity in the MD and the crystallinity in the TD is 10% or less can reduce the likelihood of deformation, whitening, and wrinkling in the packaging bag and the likelihood that the packaging bag will have a misaligned pattern or decrease in physical properties such as laminate strength and the packaging bag will deform. To achieve the above effects at a higher level, the difference between the crystallinity in the MD and the crystallinity in the TD may be 8% or less.

When the substrate layer includes a layer other than the first polypropylene film, the above phrase "the crystallinities of the first polypropylene film in the MD and the TD" may be read as "the crystallinities of the substrate layer in the MD and the TD." When the substrate layer has crystallinities in the MD and the TD within the above-mentioned range, the above effects tend to be achieved more significantly.

When the first polypropylene film is subjected to a heat treatment under condition (i) below, followed by differential scanning calorimetry under condition (ii) below, at least one melting peak may be observed at less than 163 °C. When multiple melting peaks are observed, it is sufficient that at least one of the melting peaks is observed at less than 163 °C, and the other melting peaks may be observed at 163 °C or higher, and all the melting peaks may be observed at less than 163 °C. When multiple melting peaks are observed, 30% or more of the entire of the first polypropylene film melts preferably at a temperature of less than 163 °C. To determine whether 30% or more of the entire of the first polypropylene film melts, melting peak areas can be compared. The number of observed melting peaks may be one, and no melting peaks may be observed at 163 °C or higher.

(i) The temperature is raised from 25 °C to 230 °C at a heating rate of 10 °C/min, held at 230 °C for two minutes, then lowered from 230 °C to 25 °C at a cooling rate of 10 °C/min, and held at 25 °C for five minutes.

(ii) The temperature is raised from 25 °C to 230 °C at a heating rate of 10 °C/min and held at 230 °C for five minutes.

The peak melting temperature measured under the above conditions represents the melting point of the material of the first polypropylene film from which the effects by stretching are removed by the heat treatment (hereinafter also referred to as "a melting point after heat treatment"). In the present disclosure, the laminate may be less likely to distort, whiten, and wrinkle during bag making by increasing the crystallinity of the first polypropylene film without increasing the melting point of the material of the first polypropylene film. To achieve these effects more easily, the substrate layer may have a melting point after heat treatment measured under the above conditions, at less than 163 °C.

When the first polypropylene film is subjected to differential scanning calorimetry under condition (iii) below, at least one melting peak may be observed at 167 °C or higher. The first polypropylene film may have multiple melting peaks observed, with at least one of the melting peaks observed at 167 °C or higher and at least one of the other melting peaks observed at less than 167 °C.

(iii) The temperature is raised from 25 °C to 230 °C at a heating rate of 10 °C/min and held at 230 °C for two minutes.

The peak melting temperature measured under the above condition represents the melting point of the first polypropylene film in which the effects by stretching remain (hereinafter also referred to as "a melting point before heat treatment"). With the first polypropylene film having a melting point before heat treatment at 167 °C or higher, the first polypropylene film before the heat treatment can have higher heat resistance and further reduce the likelihood of distortions, whitening, and wrinkling in the process of making the laminate into a bag. To achieve these effects more easily, the substrate layer may have a melting point before heat treatment measured under the above condition, at less than 163 °C.

The melting point after heat treatment can be adjusted depending on, for example, the molecular weight, the stereoregularity (isotactic mesopentad fraction), and the addition of a crystal nucleating agent. The melting point before heat treatment can be adjusted depending on, for example, the stretching condition, the cooling temperature, the addition of a crystal nucleating agent.

The substrate layer 11 may have a thickness within the range illustrated as the thickness of the above first polypropylene film.

(Sealant Layer)

The sealant layer 12 is a layer that provides heat sealability to the laminate and includes the second polypropylene film. The second polypropylene film is formed from a polypropylene resin that may be a monopolymer (homopolymer) of propylene or an interpolymer (copolymer) of propylene and another comonomer. Examples of the copolymer include a propylene-ethylene random copolymer, a propylene-ethylene block copolymer, and a propylene-$\alpha$ olefin copolymer. The polypropylene resin may be, for example, acid-modified polypropylene obtained by graft-modifying polypropylene with an unsaturated carboxylic acid, an acid anhydride of an unsaturated carboxylic acid, or an ester of an unsaturated carboxylic acid. The second polypropylene film may further include various additives such as a flame retarder, a slip agent, an antiblocking agent, an antioxidant, a light stabilizer, a tackifier, and an antistatic agent.

Although the second polypropylene film may be an oriented polypropylene film, the second polypropylene film is preferably a cast polypropylene film to enhance heat sealability.

The thickness of the second polypropylene film is determined based on, for example, the mass of the contents or the shape of the packaging bag. For balanced improvement of heat-sealing performance and impact resistance, the thickness of the second polypropylene film may be 30 to 150 $\mu$m, 40 to 100 $\mu$m, 50 to 100 $\mu$m, 40 to 90 $\mu$m, 30 to 80 $\mu$m, or 50 to 80 $\mu$m.

For balanced improvement of heat-sealing performance and impact resistance, the thickness of the second polypropylene film may be 35 to 75%, 40 to 70%, or 45 to 65% of the total thickness of the laminate.

The thickness of the second polypropylene film may be 90% or more of the thickness of the sealant layer 12, and the sealant layer 12 may consist of the second polypropylene film.

To further reduce curling caused by a high retort treatment, the MD thermal shrinkage of the second polypropylene film $R_{MD2}$ is preferably 0.5% or more. The thermal shrinkage $R_{MD2}$ may be smaller than the MD thermal shrinkage of the first polypropylene film $R_{MD1}$ and for example, 5.0% or less.

The TD thermal shrinkage of the second polypropylene film $R_{TD2}$ is 0.5% or more. The thermal shrinkage $R_{TD2}$ may be smaller than the TD thermal shrinkage of the first polypropylene film $R_{TD1}$ and for example, 5.0% or less.

The second polypropylene film having the thermal shrinkages $R_{MD2}$ and $R_{TD2}$ within the above ranges may be, for example, formed without stretching.

To further reduce curling caused by a high retort treatment, the difference between the thermal shrinkage $R_{MD1}$ and the thermal shrinkage $R_{MD2}$ ($R_{MD1}$ - $R_{MD2}$) is preferably as small as possible, while the difference between the thermal shrinkage $R_{TD1}$ and the thermal shrinkage $R_{TD2}$ ($R_{TD1}$ - $R_{TD2}$) is also preferably as small as possible. From this perspective, the difference ($R_{MD1}$ - $R_{MD2}$) is preferably 8% or less (e.g., 1% to 8%), while the difference ($R_{TD1}$ - $R_{TD2}$) is preferably 8% or less (e.g., 1% to 8%).

The sealant layer 12 may have a thickness within the range illustrated as the thickness of the above second polypropylene film.

The sealant layer 12 may be stacked on another layer by a known lamination method such as dry lamination, which bonds the second polypropylene film to the other layer with an adhesive (e.g., a one-component or two-component urethane adhesive), non-solvent dry lamination, which bonds the second polypropylene film to the other layer with a solvent-free adhesive, or extrusion lamination, which melts and extrudes the components of the second polypropylene film into a curtain shape and bonds the extrudate. Among these formation methods, the dry lamination is preferable due to high resistance to a high retort treatment. However, any lamination method may be adopted as long as the packaging bag is used for a treatment at a temperature of 85 °C or less.

(Intermediate Layer)

The intermediate layer 13 is interposed between the substrate layer 11 and the sealant layer 12. The laminate 100B is less prone to thermal deformation during bag making than the laminate 100A including no intermediate layer 13.

The intermediate layer 13 includes a third polypropylene film. The third polypropylene film may be a cast polypropylene film or an oriented polypropylene film. Examples of the oriented polypropylene film and the cast polypropylene film include polypropylene films illustrated as the first polypropylene film and the second polypropylene film. The third polypropylene film is preferably a stretched film in view of, for example, impact resistance, heat resistance, water resistance, and dimensional stability.

The third polypropylene film may have a thickness of 18 to 30 $\mu$m to reduce usage of materials for the purpose of reducing environmental burdens and to achieve high heat resistance, impact resistance, and excellent gas barrier performance.

The thickness of the third polypropylene film may be 5 to 30% of the total thickness of the laminate to reduce usage of materials for the purpose of reducing environmental burdens and to achieve high heat resistance, impact resistance, and excellent gas barrier performance.

The thickness of the third polypropylene film may be 90% or more of the thickness of the intermediate layer 13, and the intermediate layer 13 may consist of the third polypropylene film.

The total of the thickness of the third polypropylene film and the thickness of the first polypropylene film may be 36 to 60 $\mu$m. The total of the thickness of the substrate layer 11 and the thickness of the intermediate layer 13 may fall within this range.

The ratio between the thickness of the first polypropylene film and the thickness of the third polypropylene film (thickness of first polypropylene film/thickness of third polypropylene film) may be greater than or equal to 1.00 and may be greater than 1.00, greater than or equal to 1.25, or greater than or equal to 1.50. When the first polypropylene film in the substrate layer is thicker than the third polypropylene film of the intermediate layer, the substrate layer can be less likely to shrink thermally during bag making (during heat sealing), thus reducing the resultant deformation in the laminate. The above ratio may be, for example, smaller than or equal to 4.0. From the same perspective, the ratio between the thickness of the substrate layer and the thickness of the intermediate layer may fall within the above range.

The MD thermal shrinkage of the third polypropylene film $R_{MD3}$ is preferably 10.0% or less and may be 8.0% or less, 7.0% or less, or 5.0% or less to further reduce thermal deformation during bag making and curling caused by a high retort treatment. The MD thermal shrinkage of the third polypropylene film $R_{MD3}$ in may be 12.0% or less or 14.0% or less. The thermal shrinkage $R_{MD3}$ may be greater than the MD thermal shrinkage of the second polypropylene film $R_{MD2}$ and for example, 1.0% or more. That is, the thermal shrinkage of the third polypropylene film $R_{MD3}$ may be, for example, 1.0 to 10.0%. The thermal shrinkage $R_{MD3}$ may be 3.0% or more.

The TD thermal shrinkage of the third polypropylene film $R_{TD3}$ is 12.0% or less and may be 10.0% or less, 8.0% or less, or 7.0% or less to further reduce thermal deformation during bag making and curling caused by a high retort treatment. The thermal shrinkage $R_{TD3}$ may be greater than the TD thermal shrinkage of the second polypropylene film $R_{TD2}$ and for example, 1.0% or more or 3.0% or more. That is, the thermal shrinkage $R_{TD3}$ may be 1.0 to 12.0% or 3.0 to 12.0%.

To further reduce curling caused by a high retort treatment, the difference between the thermal shrinkage $R_{MD3}$ and the thermal shrinkage $R_{MD2}$ ($R_{MD3} - R_{MD2}$) is preferably as small as possible, while the difference between the thermal shrinkage $R_{TD3}$ and the thermal shrinkage $R_{TD2}$ ($R_{TD3} - R_{TD2}$) is preferably as small as possible. From this perspective, the difference ($R_{MD3} - R_{MD2}$) is preferably 8.0% or less (e.g., 1.0% to 8.0%), while the difference ($R_{TD3} - R_{TD2}$) is preferably 8.0% or less (e.g., 1.0% to 8.0%).

The intermediate layer 13 may have a thickness within the range illustrated as the thickness of the above third polypropylene film.

(Adhesive Layer)

Examples of materials for the adhesive that forms the adhesive layer S include a polyester-isocyanate resin, a urethane resin, and a polyether resin. To use the laminate for a retort pouch, it is preferable to use a retort-resistant, two-component urethane adhesive. That is, the adhesive layer S is preferably a layer formed from a cured article of a two-component urethane adhesive. For environmental considerations, the adhesive may not include 3-glycidyloxypropyltrimethoxysilane (GPTMS).

The thickness of the adhesive layer S may be, but is not limited to, for example, 0.5 to 5 $\mu$m or 2 to 3 $\mu$m. When the thickness of the adhesive layer S is 0.5 $\mu$m or more, the adhesion between the substrate layer and the intermediate layer is easy to improve. When the thickness is 5 $\mu$m or less, the barrier performance and recyclability of the laminate are easy to improve. The thickness of the adhesive layer S may be 0.5 to 4 $\mu$m to provide sufficient adhesiveness with the laminate having a polypropylene content of 90% by mass or more.

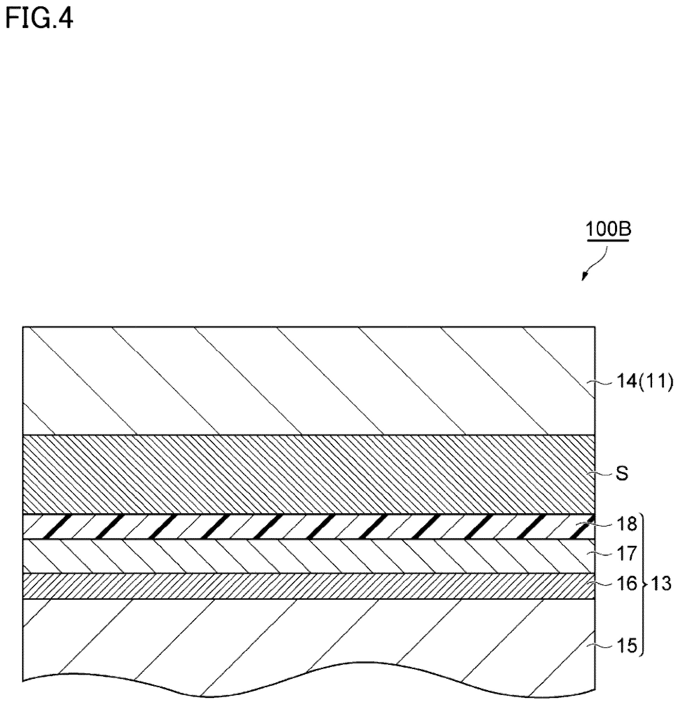

Although the substrate layer, the sealant layer, the intermediate layer, and the adhesive layer have been described, the structure of each of the layers is not limited to the above. The substrate layer, the sealant layer, and the intermediate layer may include a layer formed of a layer other than the polypropylene film (the first polypropylene film, the second polypropylene film, and the third polypropylene film). Examples of the layer other than a layer formed of the polypropylene film include a coat layer such as an adhesion enhancement layer, an inorganic oxide layer, a gas barrier coating layer, and a printed layer. Fig. 4 illustrates an enlarged view of a part of the laminate 100B as an example. The laminate 100B has a coat layer 16, an inorganic oxide layer 17, and a gas barrier coating layer 18 stacked in this order over a third polypropylene film 15. The intermediate layer 13 composed of the third polypropylene film 15, the coat layer 16, the inorganic oxide layer 17, and the gas barrier coating layer 18 and the substrate layer 11 composed of the first polypropylene film 14 are stacked with the adhesive layer S between the intermediate and substrate layers. The layer other than a layer formed of the polypropylene film may be provided on at least one surface of the first polypropylene film and/or at least one surface of the third polypropylene film. However, to reduce susceptibility to heat during heat sealing, as illustrated in Fig. 4, the layer is preferably placed between the first polypropylene film and the third polypropylene film.

The coat layer, the inorganic oxide layer, the gas barrier coating layer, and the printed layer that may be included in the substrate layer 11 and/or the intermediate layer 13 will now be described.

[Coat Layer]

The coat layer may be an anchor coat layer (also referred to as an adhesive layer) provided between the polypropylene film and the inorganic oxide layer in order to improve the adhesion between the polypropylene film and the inorganic oxide layer. The anchor coat layer provided between the polypropylene film and the inorganic oxide layer can achieve two effects: an improvement in the adhesion performance between the polypropylene film and the inorganic oxide layer; and an improvement in the smoothness of the surface of the polypropylene film. The improved smoothness facilitates uniform deposition of the inorganic oxide layer without defects, allowing high barrier performance to be exhibited easily. The anchor coat layer may be formed with an anchor coat agent.

Examples of anchor coat agents include an acrylic polyurethane resin, a polyester polyurethane resin, a polyether polyurethane resin, acid-containing polyurethane, and a polyurethane resin formed from a polyamine. The anchor coat agent is preferably an acrylic polyurethane resin or a polyester polyurethane resin for heat resistance and interlayer adhesion strength.

The thickness of the coat layer may be, but is not limited to, preferably within the range of 0.01 to 5 $\mu$m, more preferably within the range of 0.03 to 3 $\mu$m, and particularly preferably within the range of 0.05 to 2 $\mu$m. A coat layer having a thickness higher than or equal to the lower limit tends to provide more appropriate interlayer adhesion strength, whereas a coat layer having a thickness lower than or equal to the upper limit tends to easily exhibit desired gas barrier performance.

The coat layer may be applied onto the polypropylene film by any known coating method without any particular restriction, such as immersion (dipping); or methods using a spray, a coater, a printer, and a brush. Examples of the types of coaters and printers used for these methods and their coating systems include a gravure coater in a system such as direct gravure, reverse gravure, kiss reverse gravure, or offset gravure, a reverse roll coater, a micro-gravure coater, a chamber doctor coater, an air knife coater, a dip coater, a bar coater, a comma coater, and a die coater.

For the coating amount of the coat layer, the mass per m$^2$ after the anchor coat agent is applied and dried is preferably 0.01 to 5 g/m$^2$ and more preferably 0.03 to 3 g/m$^2$. When the mass per m$^2$ after the anchor coat agent is applied and dried is higher than or equal to the lower limit, the deposition is typically sufficient, whereas when the mass is lower than or equal to the upper limit, the solvent is less likely to remain since it is sufficiently and easily dried.

Examples of methods for drying the coat layer include, but are not limited to, a method of natural drying, a method of drying in an oven set at a predetermined temperature, and a method using a dryer attached to the above-mentioned coater, such as an arch dryer, a floating dryer, a drum dryer, or an infrared dryer. Furthermore, drying conditions may be selected as appropriate depending on the drying method. For example, for a method of drying in an oven, the layer is preferably dried for about one second to two minutes at temperatures of 60 to 100 °C.

For the coat layer, the polyurethane resin may be replaced with a polyvinyl alcohol resin. The polyvinyl alcohol resin may be any resin containing a vinyl alcohol unit obtained by saponifying a vinyl ester unit, such as polyvinyl alcohol (PVA) or an ethylene-vinyl alcohol copolymer (EVOH). When the polyvinyl alcohol resin is used as the coat layer, examples of methods for forming the coat layer include application with a polyvinyl alcohol resin solution and multilayer extrusion.

[Inorganic Oxide Layer]

The inorganic oxide layer contributes to improvement in the gas barrier performance. Examples of the inorganic oxide contained in the inorganic oxide layer include aluminum oxide, silicon oxide, magnesium oxide, and tin oxide. For transparency and barrier performance, the inorganic oxide may be selected from the group consisting of aluminum oxide, silicon oxide, and magnesium oxide. Because of high tensile stretchability during processing, the inorganic oxide layer is preferably a layer including silicon oxide. The use of the inorganic oxide layer can achieve high barrier performance with an ultrathin layer that does not affect the recyclability of the laminate.

The inorganic oxide layer may desirably have an O/Si ratio of 1.7 or greater. When the O/Si ratio is 1.7 or greater, good transparency is easy to achieve due to the reduced percentage of contained metal Si. The O/Si ratio is preferably 2.0 or smaller. When the O/Si ratio is 2.0 or smaller, the crystallinity of SiO can be regulated to prevent the inorganic oxide layer from being too hard, and good tensile resistance is achieved. This can reduce cracking caused in the inorganic oxide layer when the gas barrier coating layer is stacked. Even after the packaging bag is formed, the substrate layer or the intermediate layer may shrink due to the heat during boiling or retort treatment. However, the inorganic oxide layer with an O/Si ratio of 2.0 or smaller can easily conform to the shrinkage and mitigate a reduction in the barrier performance. To achieve these effects more appropriately, the O/Si ratio of the inorganic oxide layer is preferably 1.75 or greater and 1.9 or smaller, and more preferably 1.8 or greater and 1.85 or smaller.

The O/Si ratio of the inorganic oxide layer can be determined by X-ray photoelectron spectroscopy (XPS). For example, the O/Si ratio may be measured by a measurement device that is an X-ray photoelectron spectrometer (manufactured by JEOL Ltd., trade name: JPS-90MXV) using non-monochromatized Mg K$\alpha$ (1253.6 eV) as an X-ray source with an X-ray output of 100 W (10 kV - 10 mA). In quantitative analysis for determining the O/Si ratio, relative sensitivity factors of 2.28 for O 1s and 0.9 for Si 2p may be used.

The inorganic oxide layer preferably has a film thickness of 10 nm or more and 50 nm or less. A film thickness of 10 nm or more enables sufficient water vapor barrier performance to be achieved. A film thickness of 50 nm or less can reduce cracking caused by deformation due to the internal stress of the thin film, thus mitigating a reduction in the water vapor barrier performance. The film thickness that exceeds 50 nm is not preferable from the economic standpoint because costs are likely to increase due to, for example, an increased amount of materials used and a longer time taken for film formation. From the same perspective as described above, the film thickness of the inorganic oxide layer is more preferably 20 nm or more and 40 nm or less.

The inorganic oxide layer may be formed by, for example, vacuum deposition. In the vacuum deposition, physical vapor deposition or chemical vapor deposition can be used. Examples of the physical vapor deposition include, but are not limited to, vacuum evaporation, sputtering, and ion plating. Examples of the chemical vapor deposition include, but are not limited to, heating CVD, plasma CVD, and optical CVD.

In the vacuum deposition, a particularly preferable process is, for example, resistance heating vacuum evaporation, electron beam (EB) heating vacuum evaporation, induction heating vacuum evaporation, sputtering, reactive sputtering, dual magnetron sputtering, or plasma-enhanced chemical vapor deposition (PECVD). In particular, vacuum evaporation is currently the best for productivity. For heating in vacuum evaporation, any one of electron beam heating, resistive heating, and induction heating is preferably used.

[Gas Barrier Coating Layer]

The gas barrier coating layer protects the inorganic oxide layer, contributes to improvement in the gas barrier performance, and exhibits high gas barrier performance synergistically with the inorganic oxide layer. The gas barrier coating layer may be a layer formed, for example, using a gas barrier coating layer forming composition containing at least one selected from the group consisting of a hydroxyl-containing polymer compound, a metal alkoxide, a silane coupling agent, and hydrolysates thereof.

The gas barrier coating layer may be formed using a gas barrier coating layer forming composition (hereinafter also referred to as the coating agent) including, as a base resin, an aqueous solution or a water/alcohol mixed solution containing at least one selected from the group consisting of a hydroxyl-containing polymer compound, a metal alkoxide, a silane coupling agent, and hydrolysates thereof. To maintain the gas barrier performance after a hot-water treatment such as a retort treatment more appropriately, the coating agent preferably contains at least a silane coupling agent or a hydrolysate thereof, more preferably contains at least one selected from the group consisting of a hydroxyl-containing polymer compound, a metal alkoxide, and hydrolysates thereof and a silane coupling agent or a hydrolysate thereof, and still more preferably contains a hydroxyl-containing polymer compound or a hydrolysate thereof, a metal alkoxide or a hydrolysate thereof, and a silane coupling agent or a hydrolysate thereof. The coating agent may be prepared by, for example, mixing a solution obtained by dissolving a hydroxyl-containing polymer compound, which is a water-soluble polymer, into an aqueous (water or water/alcohol mixture) solvent, directly with a metal alkoxide and a silane coupling agent or a substance obtained by subjecting them to processing such as hydrolysis in advance.

Examples of hydroxyl-containing polymer compounds usable for the coating agent include polyvinyl alcohol, polyvinyl pyrrolidone, starch, methylcellulose, carboxymethyl cellulose, and sodium alginate. Among others, the use of polyvinyl alcohol (PVA) in the coating agent for the gas barrier coating layer is preferable because it particularly enhances the gas barrier performance.

Examples of metal alkoxides include tetraethoxysilane [$Si(OC_2H_5)_4$] and aluminum triisopropoxide [$Al(O\text{-}2'\text{-}C_3H_7)_3$]. Tetraethoxysilane and aluminum triisopropoxide are preferable because they are relatively stable in aqueous solvent after hydrolysis.

Examples of silane coupling agents include vinyltrimethoxysilane, $\gamma$-chloropropylmethyldimethoxysilane, $\gamma$-chloropropyltrimethoxysilane, glycidoxypropyltrimethoxysilane, $\gamma$-methacryloxypropyltrimethoxysilane, and $\gamma$-methacryloxypropylmethyldimethoxysilane. The silane coupling agent may be a multimer thereof.

The coating agent may also contain an isocyanate compound or a known additive as appropriate without degrading the gas barrier performance, such as a dispersant, a stabilizer, a viscosity modifier, or a colorant. The coating agent may also contain, as appropriate, an acid catalyst, an alkaline catalyst, or a photopolymerization initiator.

To provide high gas barrier performance with the laminate having a polypropylene content of 90% by mass or more, the thickness of the gas barrier coating layer is preferably 0.5 to 4 $\mu$m, more preferably 0.5 to 3 $\mu$m, and still more preferably 1 $\mu$m or more and 3 $\mu$m or less. The thickness of the gas barrier coating layer may be 50 to 1,000 nm or 100 to 500 nm. A gas barrier coating layer having a thickness of 50 nm or more tends to achieve higher gas barrier performance, whereas a gas barrier coating layer having a thickness of 1,000 nm or less tends to maintain sufficient flexibility.

The coating agent for forming the gas barrier coating layer may be applied by, for example, dipping, roll coating, gravure coating, reverse gravure coating, air knife coating, comma coating, die coating, screen printing, spray coating, or gravure offset printing. The coating formed by applying the coating agent may be dried by, for example, hot air drying, hot roll drying, high frequency irradiation, infrared irradiation, UV irradiation, or a combination thereof.

The coating may be dried at temperatures of, for example, 50 to 150 °C and preferably 70 to 100 °C. The drying temperature within the above range can further reduce cracking in the inorganic oxide layer or the gas barrier coating layer, thus enabling high barrier performance to be exhibited.

[Printed Layer]

The printed layer may be provided on the laminate at a position visible from outside in order to indicate information about the contents, identify the contents, improve concealability, or enhance the design quality of the packaging bag. Any printing method and printing ink may be used, and appropriate ones of the known printing methods and printing inks are selected depending on, for example, the printability of the film, the design quality such as color tone, the adhesion, and the safety as a food container. Examples of usable printing methods include gravure printing, offset printing, gravure offset printing, flexographic printing, and inkjet printing. Among others, gravure printing can preferably be used due to its productivity and high image resolution.

In order to increase the adhesion of the printed layer, the surface of the layer on which the printed layer is provided may be subjected to various pretreatments such as corona treatment, plasma treatment, and flame treatment or covered with a coat layer such as an adhesion enhancement layer. The surface of the layer on which the printed layer is provided may be the surface of the polypropylene film (the first polypropylene film or the third polypropylene film) or the surface of the gas barrier coating layer. The printed layer may have a thickness of 0.1 to 5 $\mu$m.

Although the laminates (100A, 100B) according to the exemplary embodiments of the present disclosure have been described above, the laminate in the present disclosure is not limited to the above embodiments. For example, although the layers of the laminate (100A, 100B) are bonded by the adhesive layer S, the laminate may not include the adhesive layer S. For example, the substrate layer 11 and the sealant layer 12 of the laminate 100A may be bonded directly to each other, while the substrate layer 11 and the intermediate layer 13 of the laminate 100B may be bonded directly to each other, and/or the intermediate layer 13 and the sealant layer 12 may be bonded directly to each other. However, to increase adhesiveness, the substrate layer and the intermediate layer are preferably adhered together by an adhesive layer with a thickness of 0.5 to 4 $\mu$m. From the same perspective, the intermediate layer and the sealant layer are preferably adhered together by an adhesive layer with a thickness of 0.5 to 4 $\mu$m.

<Package>

The packaging bag is formed by making the above-described laminate into a bag. Although the package is not limited to a particular shape, the package may be, for example, a bag formed by folding one laminate in half so that one part of the sealant layer faces the other and then heat-sealing three sides, a bag formed by stacking two laminates so that the sealant layers face each other and then heat-sealing the four sides, or a self-standing pouch formed by stacking two laminates so that the sealant layers face each other and sealing the laminates with a bottom material sandwiched between them. The packaging bag can contain products as its contents, such as food and pharmaceutical drugs, and undergo heat sterilization such as a retort treatment or a boiling treatment.

The retort treatment is typically a process for pressure sterilizing microorganisms such as mold, yeast, and bacteria in order to preserve the products such as food and pharmaceutical drugs. Typically, a packaging bag containing food or other contents is subjected to a pressure sterilizing treatment at 105 to 140 °C under 0.15 to 0.30 MPa for 10 to 120 minutes. There are steam retort equipment, which uses heated steam, and hot water retort equipment, which uses pressurized, heated water, and they are used as appropriate depending on conditions for sterilizing the contents such as food.

Boiling treatment is a moist heat sterilization process to preserve the products such as food and pharmaceutical drugs. Boiling treatment is usually performed with a hot water bath at 100 °C or less. More specifically, depending on the contents, a packaging bag containing food or other contents is subjected to a moist heat sterilizing treatment at 60 to 100 °C under atmospheric pressure for 10 to 120 minutes. Boiling methods are divided into a batch process in which packaging bags are immersed in a hot water bath at a fixed temperature for a fixed time and then removed, and a continuous process in which packaging bags are passed through a tunnel-like hot water bath .

Since the above-described packaging bag is less prone to curling caused by a retort treatment at a high temperature of 125 °C or higher (high retort treatment), in particular, the packaging bag can appropriately be used for a high retort treatment. In addition, since the packaging bag has less thermal deformation (distortion) during bag making and less wrinkling, the packaging bag has good appearance, high transportability, and excellent workability in filling.

Examples

Although the present disclosure will be described in more detail with reference to the following Examples, the present disclosure is not limited to these Examples.

<Preparation of Substrate Layer, Intermediate Layer, and Sealant Layer>

Biaxially oriented polypropylene films (OPP-1 to OPP-8) having the thermal shrinkages listed in table 1 below and a thickness of 20 $\mu$m were prepared as materials for the substrate layer and the intermediate layer. Furthermore, cast polypropylene films (CPP-1 to CPP-3) having the thermal shrinkages and thicknesses listed in table 2 below were prepared as the sealant layer. $R_{MD}$ in the tables represents the MD thermal shrinkage of the film, and $R_{TD}$ represents the TD thermal shrinkage of the film. $R_{MD}$ and $R_{TD}$ were measured in accordance with steps (a) to (g) described in the above embodiment.

[Table 1]

|  | Opp-1 | Opp-2 | Opp-3 | Opp-4 | Opp-5 | Opp-6 | Opp-7 | Opp-8 |
|---|---|---|---|---|---|---|---|---|
| $R_{md}$ (%) | **6.44** | 6.12 | 9.66 | 5.44 | 5.20 | 5.50 | 4.56 | 14.36 |
| $R_{td}$ (%) | 8.70 | 6.07 | 13.93 | 6.12 | 5.99 | 6.50 | 4.79 | 26.05 |
| Thickness ($\mu$m) | 20 | 20 | 20 | 20 | 20 | 20 | 20 | 20 |

[Table 2]

|  | Cpp-1 | Cpp-2 | Cpp-3 |
|---|---|---|---|
| $R_{md}$ (%) | 1.90 | 0.86 | 1.75 |
| $R_{td}$ (%) | 2.05 | 0.44 | 1.98 |
| Thickness ($\mu$m) | 60 | 60 | 100 |

<Example 1>

OPP-1 was laminated with OPP-2 by dry lamination with a two-component adhesive (manufactured by Mitsui Chemicals, Inc., trade name: base resin A525/curing agent A52), and then OPP-2 was similarly laminated with CPP-1. In this lamination, the MD of OPP-1, the MD of OPP-2, and the MD of CPP-1 were aligned. In this manner, a laminate with a multilayer structure of OPP-1 (substrate layer)/S (adhesive layer)/OPP-2 (intermediate layer)/S (adhesive layer)/CPP-1 (sealant layer) was produced. The resultant laminate had a polypropylene content of 90% by mass or more, and both the adhesive layers (S) had a thickness of 3.1 $\mu$m.

<Example 2>

(Preparation of Coat Layer Forming Composition)

Acrylic polyol and tolylene diisocyanate were mixed so that the number of NCO groups in the tolylene diisocyanate was equal to the number of OH groups in the acrylic polyol, and the mixture was diluted with ethyl acetate so that the total solid content (the total amount of the acrylic polyol and the tolylene diisocyanate) accounted for 5% by mass. To the diluted mixed solution, $\beta$-(3,4-epoxycyclohexyl)trimethoxysilane was further added in an amount of 5 parts by mass with respect to 100 parts by mass of the total amount of the acrylic polyol and the tolylene diisocyanate, and they were mixed to prepare a coat layer forming composition (anchor coat agent).

(Preparation of Gas Barrier Coating Layer Forming Composition)

Liquids A, B, and C below were mixed at a mass ratio of 65/25/10, respectively, to prepare a gas barrier coating layer forming composition.

Liquid A: a hydrolyzed solution with a solid content of 5% by mass (in terms of $SiO_2$) obtained by adding 72.1 g of 0.1 N hydrochloric acid to 17.9 g of tetraethoxysilane ($Si(OC_2H_5)_4$) and 10 g of methanol and stirring the resultant mixture for 30 minutes for hydrolysis.

Liquid B: a water/methanol solution (mass ratio of water:methanol = 95:5) containing 5% by mass of polyvinyl alcohol.

Liquid C: a hydrolyzed solution obtained by diluting 1,3,5-tris(3-trialkoxysilylpropyl)isocyanurate with a mixed solution of water/isopropyl alcohol (mass ratio of water:isopropyl alcohol = 1: 1) to a solid content of 5% by mass.

(Production of Gas Barrier Film)

After subjecting OPP-2 to corona treatment on one side, the corona-treated surface was coated with the coat layer forming composition by gravure roll coating, and the composition was dried and cured at 60 °C to form a coat layer (C1) made of an acrylic polyurethane resin with a coating amount of 0.1 g/m². Next, a vacuum evaporator based on electron beam heating was used to form a transparent inorganic oxide layer (G1) made of silicon oxide with a thickness of 30 nm. As the inorganic oxide layer (G1), a silica-deposited layer with an O/Si ratio of 1.8 was formed by adjusting the types of vapor deposition materials. The O/Si ratio was measured by an X-ray photoelectron spectrometer (manufactured by JEOL Ltd., trade name: JPS-90MXV) using non-monochromatized Mg K$\alpha$ (1253.6 eV) as an X-ray source with an X-ray output of 100 W (10 kV - 10 mA). In quantitative analysis for determining the O/Si ratio, relative sensitivity factors of 2.28 for O 1s and 0.9 for Si 2p were used.

Next, the inorganic oxide layer (G1) was coated with the gas barrier coating layer forming composition by gravure roll coating, and the composition was heated and dried in an oven under a tension of 20 N/m at a drying temperature of 120 °C to form a gas barrier coating layer (G2) with a thickness of 0.5 $\mu$m. Thus, a gas barrier film as the intermediate layer was obtained.

(Production of Laminate)

The gas barrier coating layer (G2) of the gas barrier film was laminated on OPP-1 as the substrate layer by dry lamination with a two-component adhesive (manufactured by Mitsui Chemicals, Inc., trade name: base resin A525/curing agent A52), and then OPP-2 of the gas barrier film was similarly laminated with CPP-1 as the sealant layer. In this lamination, the MD of OPP-1, the MD of OPP-2, and the MD of CPP-1 were aligned. In this manner, a laminate with a multilayer structure of OPP-1 (substrate layer)/S (adhesive layer)/G2 (gas barrier coating layer)/G1 (inorganic oxide layer)/C1 (coat layer)/OPP-2/S (adhesive layer)/CPP-1 (sealant layer) was produced. The resultant laminate had a polypropylene content of 90% by mass or more, and both the adhesive layers (S) had a thickness of 3.1 $\mu$m.

<Example 3>

OPP-1 was laminated with CPP-1 by dry lamination with a two-component adhesive (manufactured by Mitsui Chemicals, Inc., trade name: base resin A525/curing agent A52). In this lamination, the MD of OPP-1 and the MD of CPP-1 were aligned. In this manner, a laminate in Example 3 (multilayered laminate shown in table 3) was produced. The resultant laminate had a polypropylene content of 90% by mass or more, and the adhesive layer (S) had a thickness of 3.1 $\mu$m.

<Example 4>

A laminate in Example 4 (multilayered laminate shown in table 3) was produced in the same manner as in Example 3 except that CPP-1 was replaced with CPP-3.

<Example 5>

(Preparation of Coat Layer Forming Composition)

Takelac WPB-341 (manufactured by Mitsui Chemicals, Inc.) and isocyanate silane KBE-403 (manufactured by Shin-Etsu Chemical Co., Ltd.) were mixed to a solid content ratio of 9:1 to prepare a coat layer forming composition.

(Production of Gas Barrier Film)

The surface of OPP-2 was coated with the coat layer forming composition by gravure roll coating, and the composition was dried and cured at 60 °C to form a coat layer (C2) made of a polyurethane resin formed from acid-containing polyurethane and polyamine with a coating amount of 1.0 g/m$^2$. Next, similarly to Example 2, the coat layer (C2) was coated with a transparent inorganic oxide layer (G1) made of silicon oxide with a thickness of 30 nm. Thus, a gas barrier film as the intermediate layer was obtained.

(Production of Laminate)

A laminate in Example 5 (multilayered laminate shown in table 3) was produced in the same manner as in "Production of Laminate" of Example 2 except that the gas barrier film produced as described above was used and CPP-1 was replaced with CPP-3.

<Example 6>

A laminate in Example 6 (multilayered laminate shown in table 3) was produced in the same manner as in Example 1 except that OPP-2 was replaced with OPP-1.

<Comparative Example 1>

A laminate in Comparative Example 1 (multilayered laminate shown in table 3) was produced in the same manner as in Example 1 except that OPP-1 was replaced with OPP-3.

<Comparative Example 2>

A laminate in Comparative Example 2 (multilayered laminate shown in table 3) was produced in the same manner as in Example 1 except that CPP-1 was replaced with CPP-2.

<Examples 7 to 10 and Comparative Examples 3 to 4>

Laminates in Examples 7 to 10 and Comparative Examples 3 to 4 (multilayered laminates shown in table 3) were produced in the same manner as in Example 1 except that OPP-1 was replaced with biaxially oriented polypropylene films (OPP-3 to OPP-8) indicated in table 3, and a gas barrier coating layer (G3) with a thickness of 0.3 μm was formed in placed of the gas barrier coating layer (G2) with a thickness of 0.5 μm by changing the coating amount of the gas barrier coating layer forming composition.

<Analysis 1: Measurement of Crystallinity>

The laminates produced in Examples and Comparative Examples were taken as measurement samples, and the biaxially oriented polypropylene films (OPP1, OPP-3 to OPP-7) forming the substrate layers were measured for crystallinities in the MD and the TD by grazing incidence X-ray diffraction under the conditions below. When the crystallinity in the MD was measured, the X-ray emitter and the X-ray detector were arranged in a direction perpendicular to the MD. When the crystallinity in the TD was measured, the X-ray emitter and the X-ray detector were arranged in a direction perpendicular to the TD. The results are listed in table 3.

(Measurement Conditions)

Measurement device: X-ray diffractometer (manufactured by Rigaku Corporation, trade name: RINT TTR III)

Optical system: parallel beam method (detector: scintillation counter, use: for small angle, target: surface of sample)

Scanning axis: 2θ/θ

Measurement method: continuous

Counting unit: cps

Starting angle: 3° (approximate)

End angle: 35°

Sampling width: 0.02°

Scanning speed: 4°/min

Voltage: 50 kV

Current: 300 mA

Divergence longitudinal slit: 10 mm

Scattering slit: open

Receiving slit: open

<Analysis 2: Measurement of Melting Point>

The melting point (peak melting temperature) of the biaxially oriented polypropylene film forming the substrate layer was measured by differential scanning calorimetry (DSC) using the method described below.

First, from the laminates produced in Examples and Comparative Examples, the biaxially oriented polypropylene films (OPP-1, OPP-3 to OPP-7) of the substrate layers were peeled off as measurement samples. The measurement samples were heat-treated under condition (i) below and then subjected to differential scanning calorimetry under condition (ii) below to measure the melting points (peak melting temperatures) after the heat treatment. Additionally, the measurement samples were subjected to differential scanning calorimetry under condition (iii) below to measure the melting points (peak melting temperatures) before the heat treatment. When multiple melting peaks were observed in each measurement, all the temperatures were indicated in table 3. DSC7000X (trade name) manufactured by Hitachi High-Tech Science Corporation was used as a differential scanning calorimeter.

(i) The temperature is raised from 25 °C to 230 °C at a heating rate of 10 °C/min, held at 230 °C for two minutes, then lowered from 230 °C to 25 °C at a cooling rate of 10 °C/min, and held at 25 °C for five minutes.

(ii) The temperature is raised from 25 °C to 230 °C at a heating rate of 10 °C/min and held at 230 °C for five minutes.

(iii) The temperature is raised from 25 °C to 230 °C at a heating rate of 10 °C/min and held at 230 °C for two minutes.

[Table 3]

| | | Thermal shrinkage | | | | | | Crystallinity | | Melting point | |
|---|---|---|---|---|---|---|---|---|---|---|---|
| | | $R_{md1}$ | $R_{td1}$ | $R_{md2}$ | $R_{td2}$ | $R_{md3}$ | $R_{td3}$ | Md | Td | Before heat treatment Condition: (iii) | After heat treatment Condition: (i) + (ii) |
| Ex. 1 | Opp-1/s/opp-2/s/-cpp-1 | 6.44 | 8.70 | 1.90 | 2.05 | 6.12 | 6.07 | 75.43 | 80.34 | 166.5 | 163.8 |
| Ex. 2 | Opp-1/s/g2/g1/-c1/opp-2/s/cpp-1 | 6.44 | 8.70 | 1.90 | 2.05 | 6.12 | 6.07 | 75.43 | 80.34 | 166.5 | 163.8 |
| Ex. 3 | Opp-1/s/cpp-1 | 6.44 | 8.70 | 1.90 | 2.05 | - | - | 75.43 | 80.34 | 166.5 | 163.8 |
| Ex. 4 | Opp-1/s/cpp-3 | 6.44 | 8.70 | 1.75 | 1.98 | - | - | 75.43 | 80.34 | 166.5 | 163.8 |

(continued)

| | | Thermal shrinkage | | | | | | Crystallinity | | Melting point | |
| | | $R_{md1}$ | $R_{td1}$ | $R_{md2}$ | $R_{td2}$ | $R_{md3}$ | $R_{td3}$ | Md | Td | Before heat treatment Condition: (iii) | After heat treatment Condition: (i) + (ii) |
|---|---|---|---|---|---|---|---|---|---|---|---|
| Ex. 5 | Opp-1/s/g1/-c2/opp-2/s/cpp-3 | 6.44 | 8.70 | 1.75 | 1.98 | 6.12 | 6.07 | 75.43 | 80.34 | 166.5 | 163.8 |
| Ex. 6 | Opp-1/s/opp-1/s/-cpp-1 | 6.44 | 8.70 | 1.90 | 2.05 | 6.44 | 8.70 | 75.43 | 80.34 | 166.5 | 163.8 |
| Comp. Ex. 1 | Opp-3/s/opp-2/s/-cpp-1 | 9.66 | 13.93 | 1.90 | 2.05 | 6.12 | 6.07 | 85.85 | 81.25 | 161, 165 | 161 |
| Comp. Ex. 2 | Opp-1/s/opp-2/s/-cpp-2 | 6.44 | 8.70 | 0.86 | 0.44 | 6.12 | 6.07 | 75.43 | 80.34 | 166.5 | 163.8 |
| Ex. 7 | Opp-4/s/g3/g1/-c1/opp-2/s/cpp-1 | 5.44 | 6.12 | 1.90 | 2.05 | 6.12 | 6.07 | 86.72 | 80.38 | 163, 168 | 159 |
| Ex. 8 | Opp-5/s/g3/g1/-c1/opp-2/s/cpp-1 | 5.20 | 5.99 | 1.90 | 2.05 | 6.12 | 6.07 | 91.81 | 87.51 | 162, 167.5 | 158.5 |
| Ex. 9 | Opp-6/s/g3/g1/-c1/opp-2/s/cpp-1 | 5.50 | 6.50 | 1.90 | 2.05 | 6.12 | 6.07 | 91.38 | 84.63 | 162.5, 168.2 | 159.3 |
| Ex. 10 | Opp-7/s/g3/g1/-c1/opp-2/s/cpp-1 | 4.56 | 4.79 | 1.90 | 2.05 | 6.12 | 6.07 | 85.06 | 84.56 | 174 | 153, 170 |
| Comp. Ex. 3 | Opp-3/s/g3/g1/-c1/opp-2/s/cpp-1 | 9.66 | 13.93 | 1.90 | 2.05 | 6.12 | 6.07 | 85.85 | 81.25 | 161, 165 | 161 |
| Comp. Ex. 4 | Opp-8/s/g3/g1/-c1/opp-2/s/cpp-1 | 14.36 | 26.05 | 1.90 | 2.05 | 6.12 | 6.07 | 89.54 | 76.17 | 156, 166 | 160 |

<Evaluation 1: Quantity of Deformation during Bag Making (Quantitative Evaluation)>

In the laminates produced in Examples and Comparative Examples, the quantities of deformation during bag making (during heat sealing) were evaluated in accordance with the following procedure.

(a1) A square measuring 150 mm by 150 mm was cut out of the laminate as a sample for an evaluation test. Two samples of this type were prepared.

(b1) The two samples were stacked so that the sealant layers faced each other, and then the four sides were heat-sealed by heating under a surface pressure of 1.0 MPa for 0.3 seconds with a heat-seal bar set at a temperature of 160 °C. In this heat sealing, the seal width (the width in a direction perpendicular to one side of the square) was 10 mm. The heat-seal bar was a bar having metal on the top and silicone on the bottom.

(c1) After heat sealing, the resultant laminate sample (a pouch for evaluation) was allowed to stand at room temperature (25 °C) for 30 minutes and then placed on a surface plate. The four sides of the pouch for evaluation were measured with a metal straightedge for lift heights from the surface plate. The maximum value of the lift heights of the four sides was recorded as the lift height (X) of the pouch for evaluation, and the quantity of deformation was evaluated based on the following criteria. The results are listed in table 4.

[Criteria]

A: Height (X) ≤ 10 mm

B: Height (X) > 10 mm

<Evaluation 2: Degree of Deformation during Bag Making (Qualitative Evaluation)>

In the laminates produced in Examples and Comparative Examples, the degrees of deformation during bag making (during heat sealing) were evaluated in accordance with the following procedure.

(a2) A square measuring 60 mm by 60 mm was cut out of the laminate as a sample for an evaluation test. Two samples of this type were prepared.

(b2) The two samples were stacked so that the sealant layers faced each other, and then three sides were heat-sealed using a bag making machine for three-sided pouches under a surface pressure of 1.0 MPa at a temperature of 190 °C for 0.3 seconds. In this heat sealing, the seal width (the width in a direction perpendicular to one side of the square) was 10 mm.

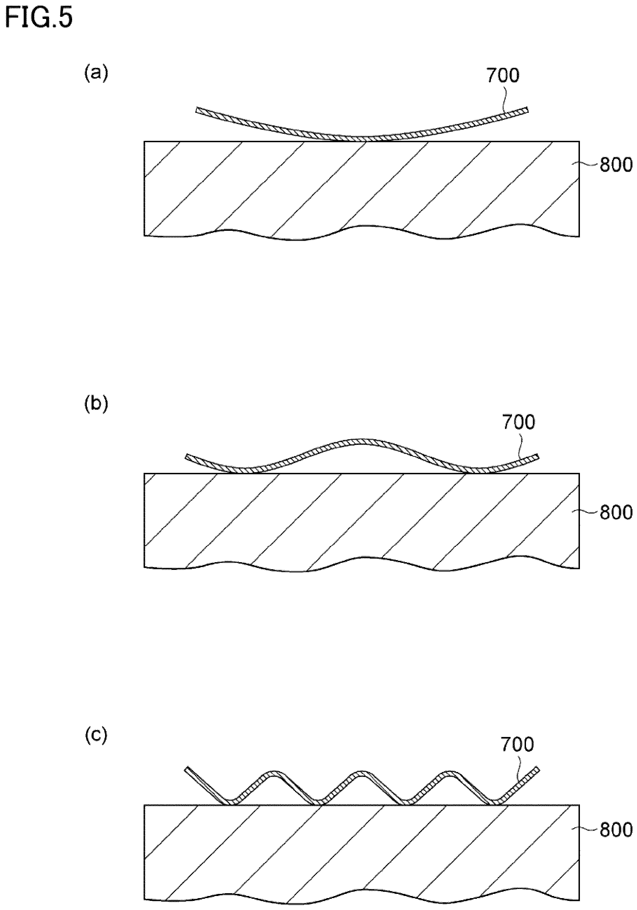

(c2) After the heat sealing, the resultant laminate sample (a pouch for evaluation) was visually checked for distortion in the seal area, and the degrees of deformation during bag making were evaluated based on the following criteria with reference to Figs. 5(a) to 5(c). The results are listed in table 4.

A: No distortion found

B: Small distortion found

C: Great distortion found

Figs. 5(a) to 5(c) are cross-sectional views of the seal area of a pouch and schematic diagrams illustrating distortion states of the pouch after heat sealing. Fig. 5(a) illustrates a pouch rated as substantially undistorted and rated "A" as above. Fig. 5(b) illustrates a pouch rated as slightly distorted and rated "B" as above. Fig. 5(c) illustrates a pouch rated as greatly distorted and rated "C" as above. In evaluation, a pouch 700 is placed on a desk 800.

<Evaluation 3: Whitening during Bag Making>

The pouch produced in Evaluation 2 above was visually checked for any whitening in the seal area and evaluated based on the following criteria. The results are listed in table 4.

A: No whitening found

B: Faint whitening found when viewed against the light

C: Obvious whitening found

<Evaluation 4: Wrinkling during Bag Making>

The pouch produced in Evaluation 2 above was visually checked for wrinkling in the seal area and evaluated based on the following criteria. The results are listed in table 4.

A: No wrinkling found

B: Shallow wrinkling found

C: Deep wrinkling found

<Evaluation 5: Degree of Curling in High Retort Treatment>

In the laminates produced in Examples and Comparative Examples, the degrees of curling during a high retort treatment were evaluated in accordance with the following procedure.

(a) A square measuring 250 mm by 250 mm was cut out of the laminate as a sample for an evaluation test.

(b) The sample was placed in a retort sterilizer with the substrate layer facing upward and subjected to a shower retort treatment under a pressure of 0.3 bars at 128 °C for 16 minutes.

(c) The sample after the shower retort treatment was allowed to stand at room temperature for 30 minutes, and then a square measuring 200 mm by 200 mm was cut out from the center of the sample and taken as an evaluation sample.

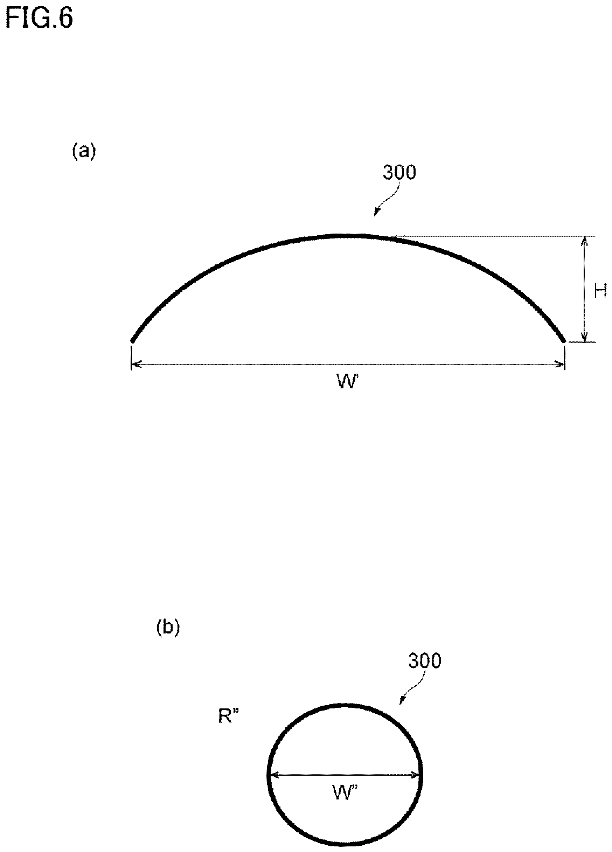

(d) The sample obtained in (c) above was placed on a surface plate. As illustrated in Fig. 6(a), when the sample (300 in Fig. 6) was curved, the lift height (H) of the sample from the surface plate and the width of the arc (W') were measured. As illustrated in Fig. 6(b), when the sample (300 in Fig. 6) was cylindrical, the inner diameter of the cylinder (W") was measured. A metal straight edge was used for the measurement.

(e) When the sample was curved, the curvature radius (R) was calculated based on formula (a) below, and the degree of curling was evaluated in accordance with the criteria described below. When the sample was cylindrical, the degree of curling was evaluated in accordance with the criteria described below with the inside radius of the cylinder (W"/2) taken as the curvature radius R. The results are listed in table 4.

$$R = ([W'/2]^2 + [H]^2)/(2 \times [H]) \dots (a)$$

[Criteria]

A ...

$$\text{Curvature radius } R \geq 50$$

B ...

$$\text{Curvature radius } R < 50$$

[Table 4]

| | Quantity of deformation | | Degree of deformation | Whitening | Wrinkling | Degree of curling | |
|---|---|---|---|---|---|---|---|
| | X (mm) | Grade | | | | R (mm) | Grade |
| Ex. 1 | 9.0 | A | A | B | A | 91.4 | A |
| Ex. 2 | 9.0 | A | A | B | A | 82 | A |
| Ex. 3 | 11.2 | B | A | B | A | 80 | A |
| Ex. 4 | 10.5 | B | A | B | A | 88 | A |
| Ex. 5 | 8.3 | A | A | B | A | 85 | A |
| Ex. 6 | 9.2 | A | A | B | A | 78 | A |
| Comp. Ex. 1 | 13.0 | C | C | C | C | 61.9 | A |
| Comp. Ex. 2 | 8.0 | A | B | B | B | 2.4 | B |
| Ex. 7 | 7.5 | A | A | A | A | 105 | A |
| Ex. 8 | 7.2 | A | A | A | A | 108 | A |
| Ex. 9 | 7.3 | A | A | A | A | 110 | A |
| Ex. 10 | 7.0 | A | A | A | A | 115 | A |
| Comp. Ex. 3 | 12.8 | C | C | C | C | 69 | A |
| Comp. Ex. 4 | 16.0 | C | C | C | C | 60 | A |

[Reference Signs List]

| | |
|---|---|
| 11 | Substrate layer |
| 12 | Sealant layer |
| 13 | Intermediate layer |
| 14 | First polypropylene film |
| 15 | Third polypropylene film |
| 16 | Coat layer |
| 17 | Inorganic oxide layer |
| 18 | Gas barrier coating layer |
| 100A, 100B | Laminate |
| S | Adhesive layer |

**Claims**

1. A packaging laminate containing polypropylene in an amount of 90% by mass or more of a total of the packaging laminate, the packaging laminate comprising at least:

   a substrate layer including a first polypropylene film; and
   a sealant layer including a second polypropylene film,
   wherein the first polypropylene film is an oriented polypropylene film,
   the first polypropylene film and the second polypropylene film are arranged with machine directions MD thereof substantially aligned, and
   when a thermal shrinkage of a film in a predetermined direction is defined in formula (1) below,
   the first polypropylene film has a machine-direction MD thermal shrinkage $R_{MD1}$ smaller than or equal to 10.0%,
   the first polypropylene film has a transverse-direction TD thermal shrinkage $R_{TD1}$ smaller than or equal to 12.0%, and
   the second polypropylene film has a TD thermal shrinkage $R_{TD2}$ smaller than the thermal shrinkage $R_{TD1}$ and greater than or equal to 0.5%.

   Thermal shrinkage (%) in predetermined direction = ([Length in predetermined direction before heating] - [Length in predetermined direction after heating at 150 °C for 15 minutes])/[Length in predetermined direction before heating] $\times$ 100   (1)

2. The laminate according to claim 1, wherein
   the first polypropylene film has a crystallinity greater than or equal to 80% both in the MD and the TD, as measured by grazing incidence X-ray diffraction.

3. The laminate according to claim 2, wherein
   the first polypropylene film has a crystallinity greater than or equal to 86% in a first of the MD and the TD and a crystallinity greater than or equal to 80% in a second of the MD and the TD as measured by grazing incidence X-ray diffraction.

4. The laminate according to claim 1, wherein
   when the first polypropylene film is subjected to a heat treatment under condition (i) below, followed by differential scanning calorimetry under condition (ii) below, at least one melting peak is observed at less than 163 °C.

   (i) The temperature is raised from 25 °C to 230 °C at a heating rate of 10 °C/min, held at 230 °C for two minutes, then lowered from 230 °C to 25 °C at a cooling rate of 10 °C/min, and held at 25 °C for five minutes.
   (ii) The temperature is raised from 25 °C to 230 °C at a heating rate of 10 °C/min and held at 230 °C for five minutes.

5. The laminate according to claim 1, wherein
   when the first polypropylene film is subjected to differential scanning calorimetry under condition (iii) below, at least one melting peak is observed at 167 °C or higher.

(iii) The temperature is raised from 25 °C to 230 °C at a heating rate of 10 °C/min and held at 230 °C for two minutes.

6. The laminate according to claim 1, wherein
the thermal shrinkage $R_{MD1}$ and the thermal shrinkage $R_{TD1}$ of the first polypropylene film are each 7.0% or less.

7. The laminate according to claim 1, further comprising:

an intermediate layer between the substrate layer and the sealant layer, the intermediate layer including a third polypropylene film,
wherein the first polypropylene film, the second polypropylene film, and the third polypropylene film are arranged with machine directions (MDs) thereof substantially aligned, and
when a thermal shrinkage of a film in a predetermined direction is defined as in formula (1) above,
the third polypropylene film has a TD thermal shrinkage $R_{TD3}$ greater than the thermal shrinkage $R_{TD2}$ and smaller than or equal to 12.0%.

8. The laminate according to claim 7, wherein
at least one of the substrate layer and the intermediate layer includes an inorganic oxide layer and a gas barrier coating layer covering the inorganic oxide layer.

9. The laminate according to claim 7, wherein

the first polypropylene film and the third polypropylene film each have a thickness of 18 to 30 $\mu$m, and
the second polypropylene film has a thickness of 50 to 100 $\mu$m.

10. The laminate according to claim 9, wherein
the substrate layer and the intermediate layer are adhered together by an adhesive layer with a thickness of 0.5 to 4 $\mu$m.

11. The laminate according to claim 9, wherein
the intermediate layer and the sealant layer are adhered together by an adhesive layer with a thickness of 0.5 to 4 $\mu$m.

12. The laminate according to claim 1, wherein
the first polypropylene film is a biaxially oriented polypropylene film.

13. The laminate according to claim 1, wherein
the second polypropylene film is a cast polypropylene film.

14. The laminate according to any one of claims 1 to 13, wherein
the laminate is for a retort pouch.

15. A packaging bag formed by making the laminate according to any one of claims 1 to 13 into a bag.

FIG.1

100A

11

S

12

FIG.2

# FIG.3

FIG.4

# FIG.5

(a)

700

800

(b)

700

800

(c)

700

800

# FIG.6

(a)

(b)

## INTERNATIONAL SEARCH REPORT

| | International application No. |
|---|---|
| | **PCT/JP2023/020833** |

### A. CLASSIFICATION OF SUBJECT MATTER

***B65D 65/40***(2006.01)i; ***B32B 7/028***(2019.01)i; ***B32B 9/00***(2006.01)i; ***B32B 27/32***(2006.01)i
FI:  B65D65/40 D BRH; B32B27/32 Z; B32B7/028; B32B9/00 A; B65D65/40 A; B32B27/32 E

According to International Patent Classification (IPC) or to both national classification and IPC

### B. FIELDS SEARCHED

Minimum documentation searched (classification system followed by classification symbols)

B65D65/40; B32B7/028; B32B9/00; B32B27/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-20391 A (TOPPAN PRINTING CO LTD) 18 February 2021 (2021-02-18) | 1-15 |
| A | WO 2019/065306 A1 (TOYO BOSEKI) 04 April 2019 (2019-04-04) | 1-15 |
| A | JP 2021-178974 A (TOYO BOSEKI) 18 November 2021 (2021-11-18) | 1-15 |
| A | JP 2018-89567 A (TOPPAN PRINTING CO LTD) 14 June 2018 (2018-06-14) | 1-15 |
| A | JP 9-290477 A (TOPPAN PRINTING CO LTD) 11 November 1997 (1997-11-11) | 1-15 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 June 2023** | **04 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

# EP 4 538 196 A1

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| JP | 2021-20391 | A | 18 February 2021 | US | 2022/0153006 | A1 | |
| | | | | WO | 2021/020400 | A1 | |
| | | | | EP | 4005791 | A1 | |
| | | | | CN | 114126974 | A | |
| WO | 2019/065306 | A1 | 04 April 2019 | JP | 2023-1143 | A | |
| | | | | KR | 10-2020-0047733 | A | |
| | | | | CN | 111132831 | A | |
| | | | | TW | 201919900 | A | |
| JP | 2021-178974 | A | 18 November 2021 | JP | 2021-178973 | A | |
| | | | | JP | 2021-178972 | A | |
| | | | | US | 2021/0388193 | A1 | |
| | | | | WO | 2020/137790 | A1 | |
| | | | | EP | 3904052 | A1 | |
| | | | | CN | 113226703 | A | |
| | | | | KR | 10-2021-0109569 | A | |
| | | | | TW | 202031751 | A | |
| JP | 2018-89567 | A | 14 June 2018 | US | 2019/0283382 | A1 | |
| | | | | WO | 2018/101350 | A1 | |
| | | | | EP | 3549681 | A1 | |
| | | | | CN | 110022992 | A | |
| JP | 9-290477 | A | 11 November 1997 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020040257 A